# EUROPÄISCHE PATENTSCHRIFT

(11) **EP 1 223 542 B1**
(45) Veröffentlichungstag und Bekanntmachung des Hinweises auf die Patenterteilung: **05.09.2007**
(21) Anmeldenummer: 00122068.0
(22) Anmeldetag: 11.10.2000
(51) Int. Cl.: G06K 13/08

(54) **Kartenleser mit Kartensperre**
Card reader with a shutter
Lecteur de cartes d'un obturateur

(43) Veröffentlichungstag der Anmeldung: 17.07.2002
(73) Patentinhaber: ddm hopt + schuler GmbH & Co. KG, D-78628 Rottweil (DE)
(72) Erfinder: Hopt, Jürgen, 78628 Rottweil (DE); Storz, Michael, 78467 Konstanz (DE); Hopt, Karl-Rudolf, 78628 Rottweil (DE)
(74) Vertreter: Kohler Schmid Möbus

(56) Entgegenhaltungen:
- EP-A- 0 063 689
- EP-A- 0 468 145
- PATENT ABSTRACTS OF JAPAN vol. 017, no. 060 (P-1482), 5. Februar 1993 (1993-02-05) & JP 04 271065 A (OLYMPUS OPTICAL CO LTD), 28. September 1992 (1992-09-28)

## Beschreibung

Die Erfindung betrifft einen Kartenleser mit einer in den Kartenschacht bzw. die Kartenbahn eingreifenden Kartensperre, die schräg zum Kartenschacht verschiebbar ist.

Ein derartiger Kartenleser ist beispielsweise durch die EP-A-0 063 689 bekannt geworden.

Bei derartigen Kartenlesern ist die im Bereich der Einführöffnung des Kartenlesers angeordnete Kartensperre nur geöffnet, wenn die Karte in den Kartenleser eingeführt oder ausgegeben wird, um Manipulationen am Kartenleser entgegenzuwirken. Allerdings kann bei Stromausfall das Schließen der Kartensperre durch eine eingeführte Karte blockiert sein, wodurch die Kartensperre auch nach Entfernen der blockierenden Karte nicht mehr schließt.

Aus der EP-A-0 468 145 ist weiterhin eine Vorrichtung zum Lesen und Beschreiben von Wertkarten bekannt, in deren Gehäuse ein von einer ersten Endstellung in eine zweite Endstellung verschiebbarer Wagen angeordnet ist. Im Wagen ist eine ebenfalls verschiebbare Kartenaufnahme angeordnet. Es sind Mittel vorhanden, die eine Relativbewegung des Wagens gegenüber dem Gehäuse in eine Relativbewegung der Kartenaufnahmevorrichtung gegenüber dem Wagen umsetzen. Eine in die Vorrichtung eingeführte Wertkarte wird durch manuellen Druck auf den Wagen in diesen eingezogen und ist während eines Lese- und Schreibvorgangs durch eine Klappe dem Benutzer unzugänglich verschlossen.

Aus der eingangs genannten EP-A-0 063 689 ist ein Wertkartenfernsprecher bekannt, dessen Gehäuse zur Erhöhung der Betrugssicherheit mit einem Eingabeschlitz versehen ist, der durch einen Schieber verschließbar ist. An diesem ist eine Zahnstange angebracht, die in ein Zahnrad eingreift, das axial mit einem weiteren Zahnrad verbunden ist, das in die Zähnung einer eingeschobenen Wertkarte eingreift und diese beim Schließen des Schiebers in das Gehäuse und beim Öffnen so weit aus dem Gehäuse transportiert, daß sie ergriffen werden kann. Auf der Achse ist außerdem ein Anschlag zur Begrenzung der Einschubtiefe sowie eine Kontaktiervorrichtung für die Wertkarte befestigt.

Es ist daher die Aufgabe der Erfindung, einen Kartenleser der eingangs genannten Art derart zu verbessern, daß auch nach Entfernen einer die Kartensperre blockierenden Karte die Kartensperre sicher schließt.

Diese Aufgabe wird erfindungsgemäß dadurch gelöst, daß die Kartensperre mit einem Mitnehmer in die Aussparung eines verschwenkbaren Führungselements eingreift, daß die Aussparung in der bei geöffneter Kartensperre eingenommenen einen Schwenkendlage des Führungselements durch einen am Führungselement schwenkbar gelagerten und in Schließrichtung der Kartensperre in Anlage an einen Anschlag des Führungselements vorgespannten Steuerhebel auf eine Führungskulisse für den Mitnehmer derart begrenzt ist, dass im Fall einer die Kartensperre beim Schließen blockierenden Karte der Mitnehmer den Steuerhebel gegen die Vorspannung verschwenkt, und daß die Aussparung an der anderen Schwenkendlage des Führungselements derart ausgebildet ist, dass nach dem Entfernen der die Kartensperre blockierenden Karte sich der Mitnehmer durch die auf ihn mittels des Steuerhebels ausgeübte Kraft soweit in Schließrichtung bewegen kann, dass die Kartensperre in Schließposition gebracht wird.

Erfindungsgemäß führt bei nichtvorhandener Karte das zum Schließen der Kartensperre verschwenkte Führungselement den Mitnehmer in der Führungskulisse in Schließrichtung, wodurch die Kartensperre geschlossen wird. Bei blockierter Kartensperre wird der Steuerhebel durch den Mitnehmer gegen die Wirkung einer Rückstellkraft entgegen der Schließrichtung ausgelenkt, wodurch die Kartensperre in Schließrichtung vorgespannt wird. Nach Entfernen der blockierenden Karte wird die Kartensperre mechanisch durch den Steuerhebel in ihre Schließposition bewegt. Der mit der Erfindung erzielte Vorteil besteht darin, daß die kurz nach einem Stromausfall aufgrund kapazitiver Mittel (z.B. Kondensator) kurzfristig noch vorhandene elektrische Energie bei blockierter Kartensperre zur mechanischen Vorspannung der Kartensperre in Schließrichtung genutzt wird. Im Gegensatz zur elektrischen Energie wirkt die mechanische Vorspannung, bis die blockierende Karte entfernt ist.

Bei besonders bevorzugten Ausführungsformen der Erfindung ist die Kartensperre rechtwinklig zum Kartenschacht verschiebbar.

Vorzugsweise weist das Führungselement ein mit einem elektrisch angetriebenen Antriebsritzel kämmendes Zahnsegment auf. Das Antriebsritzel wird von einem Schrittmotor angetrieben.

Um die Kartensperre in ihrer Schließposition entgegen der Schließrichtung zu sichern, weist das Führungselement eine in die Aussparung ragende, den Mitnehmer bei geschlossener Kartensperre in Schließrichtung hintergreifende Rastnase und eine sich in Schließrichtung der Kartensperre bis zur Rastnase erstreckende Führungsfläche für den Mitnehmer aufweist.

Vorzugsweise sind die Schwenkachse des Führungselements und der Mitnehmer so angeordnet, daß bei offener und/oder geschlossener Kartensperre eine Selbsthemmung der Kartensperre gegen die Schließrichtung besteht. Das heißt, die Kartensperre kann gegen die Schließrichtung nur durch einen Antrieb geöffnet werden.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigt:
- Fig. 1: ein Ausführungsbeispiel des erfindungsgemäßen Kartenlesers, dessen Kartenschacht von einer Kartensperre freigegeben ist;
- Fig. 2: den Kartenleser der Fig. 1, wobei die Kartensperre den Kartenschacht verschließt; und
- Fig. 3: den Kartenleser der Fig. 1, wobei die Kartensperre durch eine eingeführte Karte blockiert ist.

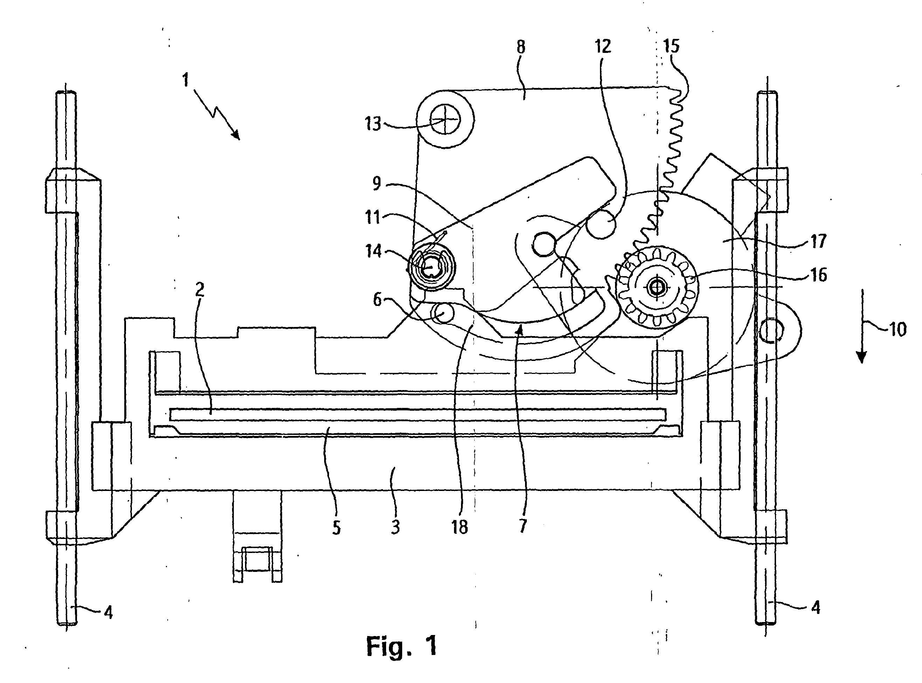

Der in **Fig. 1** gezeigte Kartenleser **1** umfaßt eine im Bereich der Einführöffnung für eine Karte **2** vorgesehene Kartensperre (Shutter) **3,** die in ihrer Schließposition den Kartenschacht verschließt. Die Kartensperre 3 ist rechtwinklig zum Kartenschacht des Kartenlesers 1 an zwei seitlichen Führungsstangen **4** verschiebbar geführt und weist eine Öffnung **5** auf, die bei geöffneter Kartensperre 3 (Fig. 1) mit dem Kartenschacht fluchtet. Ein stiftförmiger Mitnehmer **6** der Kartensperre 3 greift in die Aussparung **7** eines verschwenkbaren Führungselements **8** ein, an dem ein Steuerhebel 9 schwenkbar gelagert ist. Der Steuerhebel **9** ist in Schließrichtung **10** der Kartensperre 3 durch eine Schenkelfeder **11** in Anlage an einen Anschlag **12** des Führungselements 8 vorgespannt. Die Schwenkachsen **13** bzw. **14** des Führungselements 8 und des Steuerhebels 9 verlaufen parallel zur Bewegungsrichtung der Karte 2 im Kartenleser 1. Mit einem Zahnsegment **15** des Führungselements 8 kämmt das Antriebsritzel **16** eines Schrittmotors **17**.

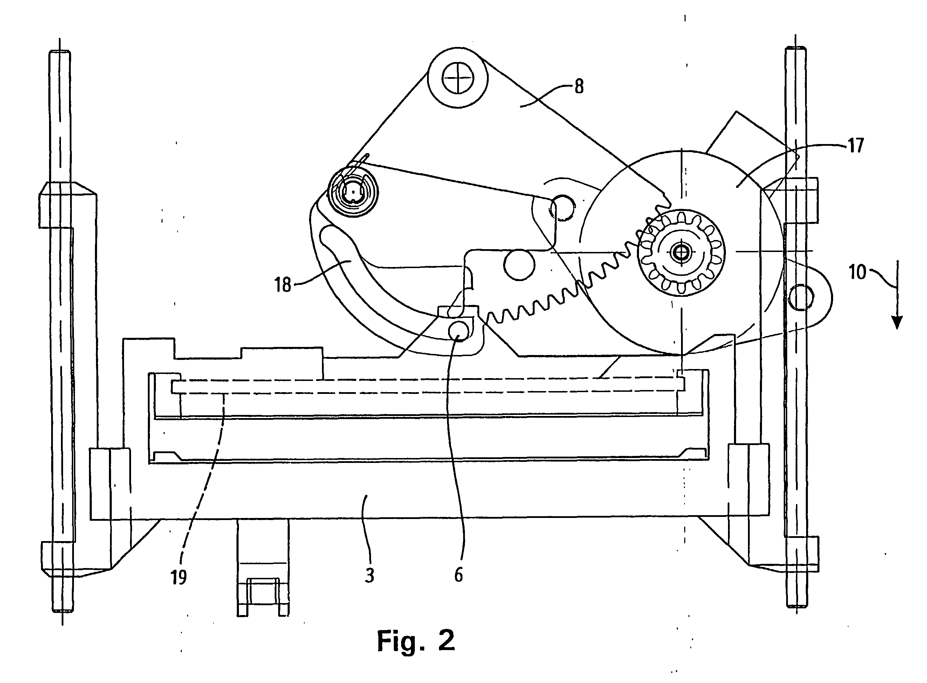

Bei geöffneter Kartensperre 3 (Fig. 1) ist die Aussparung 7 durch den Steuerhebel 9 auf eine gekrümmte Führungskulisse **18** für den Mitnehmer 6 begrenzt und befindet sich der Mitnehmer 6 am einen (linken) Ende der Führungskulisse 18, deren Krümmungsradius bezogen auf die Schwenkachse 13 in Richtung auf das andere (rechte) Ende der Führungskulisse 18 zunimmt. Wird bei nichtvorhandener Karte das Führungselement 8 durch den Schrittmotor 17 im Uhrzeigersinn verschwenkt, so wird der Mitnehmer 6 in der Führungskulisse 18 und damit auch die Kartensperre 3 in Schließrichtung 10 verschoben, bis die Führungskulisse 18 mit ihrem rechten Ende am Mitnehmer 6 anliegt. Dann befindet sich die Kartensperre 3 in ihrer den Kartenschacht **19** verschließenden Schließposition (Fig. 2).

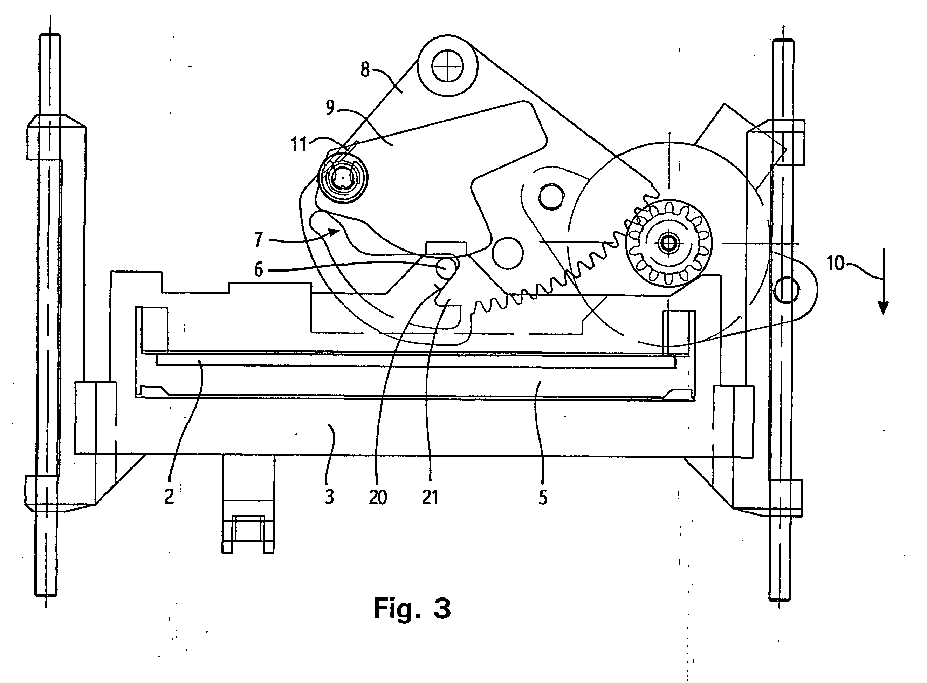

Wird das Führungselement 8 aus seiner in Fig. 1 gezeigten Ausgangsstellung im Uhrzeigersinn verschwenkt, wenn eine Karte 2 die Öffnung 5 der Kartensperre 3 noch durchgreift, so ist die Kartensperre 3 durch die Karte 2 in Schließrichtung 10 blockiert. Zwar verschwenkt auch in diesem Fall das Führungselement 8 wie in Fig. 2 in seine andere Schwenkendlage, aber der in Schließrichtung 10 blockierte Mitnehmer 6 kann der durch den Steuerhebel 9 begrenzten Führungskulisse 15 nicht folgen, so daß der Steuerhebel 9 durch den Mitnehmer 6 gegen die Wirkung der Schenkelfeder 11 entgegen der Schließrichtung 10 verschwenkt wird und dabei den von ihm bisher verdeckten Teil der Aussparung 7 für den Mitnehmer 6 freigibt. In der Schwenkendlage des Führungselements 8 ist die blockierte Kartensperre 3 durch den auf den Mitnehmer 6 in Schließrichtung 10 wirkenden Steuerhebel 9 vorgespannt (**Fig. 3**) und ist die Aussparung 7 in Schließrichtung 10 für den Mitnehmer 6 mindestens so -lang wie der noch fehlende Schließweg der durch eine Karte 2 blockierten Kartensperre 3 in die Schließposition. Wird die blockierende Karte 2 entfernt, so bewegt der Spannhebel 9 den Mitnehmer 6 in Schließrichtung 10 und damit die Kartensperre 3 in ihre Schließposition. Dabei läuft der Mitnehmer 6 auf eine schräg zur Schließrichtung 10 verlaufende Führungskurve **20** einer in die Aussparung 7 ragenden Rastnase **21** auf, wodurch das Führungselement 8 im Uhrzeigersinn gegen die Wirkung einer nicht dargestellten Rückstellkraft verschwenkt wird, bis die Rastnase 21 bei geschlossener Kartensperre 3 den Mitnehmer 6 in Schließrichtung 10 hintergreifen kann. In ihrer Schließposition ist die Kartensperre 3 daher durch die Rastnase 21 entgegen der Schließrichtung 10 gesichert.

Die Schwenkachse 13 des Führungselements 8 und der Mitnehmer 6 sind so angeordnet, daß bei offener und geschlossener Kartensperre 3 eine Selbsthemmung der Kartensperre 3 besteht. Das heißt, die Kartensperre 3 kann gegen die Schließrichtung 10 ohne den Schrittmotor 17 nicht geöffnet werden.

## Patentansprüche

1. Kartenleser (1) mit einer in den Kartenschacht (19) eingreifenden Kartensperre (3), die schräg zum Kartenschacht (19) verschiebbar ist,
**dadurch gekennzeichnet,**
**daß** die Kartensperre (3) mit einem Mitnehmer (6) in die Aussparung (7) eines verschwenkbaren Führungselements (8) eingreift,
**daß** die Aussparung (7) in der bei geöffneter Kartensperre (3) eingenommenen einen Schwenkendlage des Führungselements (8) durch einen am Führungselement (8) schwenkbar gelagerten und in Schließrichtung (10) der Kartensperre (3) in Anlage an einen Anschlag (12) des Führungselements (8) vorgespannten Steuerhebel (9) auf eine Führungskulisse (18) für den Mitnehmer (6) derart begrenzt ist,
**dass** im Fall einer die Kartensperre (3) beim Schließen blockierenden Karte (2) der Mitnehmer (6) den Steuerhebel (9) genen die Vorspannung verschwenkt, und
**daß** die Aussparung (7) an der anderen Schwenkendlage des Führungselements (8) derart ausgebildet ist, dass nach dem Entfernen der die Kartensperre (3) blockierenden Karte (2) sich der Mitnehmer (6) durch die auf ihn mittels des Steuerhebels (9) ausgeübte Kraft soweit in Schließrichtung (10) bewegen kann, dass die Kartensperre (3) in Schließposition gebracht wird.

2. Kartenleser nach Anspruch 1, **dadurch gekennzeichnet, daß** die Kartensperre (3) rechtwinklig zum Kartenschacht (19) verschiebbar ist.

3. Kartenleser nach Anspruch 1 oder 2, **dadurch gekennzeichnet, daß** das Führungselement (8) ein mit einem Antriebsritzel (16) kämmendes Zahnsegment (15) aufweist.

4. Kartenleser nach einem der vorhergehenden Ansprüche, **dadurch gekennzeichnet, daß** das Führungselement (8) von einem Schrittmotor (17) angetrieben ist.

5. Kartenleser nach einem der vorhergehenden Ansprüche, **dadurch gekennzeichnet, dass** das Führungselement (8) eine in die Aussparung (7) ragende, den Mitnehmer (6) bei geschlossener Kartensperre (3) in Schließrichtung (10) hintergreifende Rastnase (21) und eine sich schräg zur Schließrichtung (10) der Kartensperre (3) bis zur Rastnase (21) erstreckende Führungsfläche (20) für den Mitnehmer (6) aufweist.

6. Kartenleser nach einem der vorhergehenden Ansprüche, **dadurch gekennzeichnet, daß** die Schwenkachse (13) des Führungselements (8) und der Mitnehmer (6) so angeordnet sind, daß bei offener und/oder geschlossener Kartensperre (3) eine Selbsthemmung der Kartensperre (3) gegen die Schließrichtung (10) besteht.

## Claims

1. Card reader (1) comprising a card lock (3) that engages with the card shaft (19) and can be displaced obliquely to the card shaft (19),
**characterized in that**
a tappet (6) of the card lock (3) engages with a recess (7) of a pivotable guiding element (8),
the recess (7) is delimited to a guiding link (18) for the tappet (6) by a control lever (9) which is pivotably disposed on a guiding element (8) and is pretensioned into abutment on a stop (12) of the guiding element (8) in the closing direction (10) of the card lock (3), in one final pivot position of the guiding element (8) assumed when the card lock (3) is open,
the tappet (6) pivots the control lever (9) against the pretension when a card (2) blocks the card lock (3), and
the recess (7) is designed at the other final pivot position of the guiding element (8) such that after removing the card (2) that blocks the card lock (3), the tappet (6) can move in the closing direction (10) due to the force of the control lever (9) that acts on it, until the card lock (3) has reached the closed position.

2. Card reader according to claim 1, **characterized in that** the card lock (3) can be displaced at a right angle to the card shaft (19).

3. Card reader according to claim 1 or 2, **characterized in that** the guiding element (8) has a toothed segment (15) that meshes with a drive pinion (16).

4. Card reader according to any one of the preceding claims, **characterized in that** the guiding element (8) is driven by a step motor (17).

5. Card reader according to any one of the preceding claims, **characterized in that** the guiding element (8) comprises a noselike notch (21) that projects into the recess (7) and engages behind the carrier (6) in the closing direction (10) when the card lock (3) is closed, and a guiding surface (20) for the tappet (6), which extends in the closing direction (10) of the card lock (3) up to the notch (21).

6. Card reader according to any one of the preceding claims, **characterized in that** the pivot axis (13) of the guiding element (8) and the tappet (6) are disposed such that the card lock (3) is self-locking in a direction opposite to the closing direction (10) when the card lock (3) is open and/or closed.

## Revendications

1. Lecteur de carte (1) avec un blocage de carte (3) s'engageant dans la fente de carte (19), déplaçable obliquement relativement à la fente de carte (19),
**caractérisé**
**en ce que** le blocage de carte (3) s'engage par un entraîneur (6) dans la cavité (7) d'un élément de guidage pivotant (8),
**en ce que** la cavité (7), dans la première position finale de pivotement de l'élément de guidage (8) présentée à l'ouverture du blocage de carte (3), est limitée sur une coulisse de guidage (18) pour l'entraîneur (6) par un levier de commande (9) monté de manière à pouvoir pivoter sur l'élément de guidage (8) et précontraint dans la direction de fermeture (10) du blocage de carte (3) en butant contre une butée (12) de l'élément de guidage (8),
de telle manière que, dans le cas d'une carte (2) bloquant le blocage de carte (3) à la fermeture, l'entraîneur (6) pivote le levier de commande (9) dans la direction opposée à la direction de précontrainte,
et **en ce que** la cavité (7) est formée sur l'autre position finale de pivotement de l'élément de guidage (8) de telle manière qu'après retrait de la carte (2) bloquant le blocage de carte (3), l'entraîneur (6) peut se déplacer dans la direction de fermeture (10) par la force appliquée sur lui au moyen du levier de commande (9), jusqu'à ce que le blocage de carte (3) soit amené en position de fermeture.

2. Lecteur de carte selon la revendication 1, **caractérisé en ce que** le blocage de carte (3) est déplaçable perpendiculairement à la fente de carte (19).

3. Lecteur de carte selon la revendication 1 ou la revendication 2, **caractérisé en ce que** l'élément de guidage (8) comporte un segment denté (15) s'engrenant avec un pignon d'entraînement (16).

4. Lecteur de carte selon l'une des revendications précédentes, **caractérisé en ce que** l'élément de guidage (8) est entraîné par un moteur pas à pas (17).

5. Lecteur de carte selon l'une des revendications précédentes, **caractérisé en ce que** l'élément de guidage (8) comporte un talon d'enclenchement (21) saillant dans la cavité (7), retenant l'entraîneur (6) en direction de fermeture (10) lorsque le blocage de carte (3) est fermé, et une surface de guidage (20) pour l'entraîneur (6) s'étendant obliquement à la direction de fermeture (10) du blocage de carte (3) jusqu'au talon d'enclenchement (21).

6. Lecteur de carte selon l'une des revendications précédentes, **caractérisé en ce que** l'axe de pivotement (13) de l'élément de guidage (8) et l'entraîneur (6) sont disposés de manière à réaliser un auto-blocage du blocage de carte (3) dans la direction opposée à la direction de fermeture (10), le blocage de carte (3) étant ouvert et/ou fermé.
